# EUROPÄISCHE PATENTSCHRIFT

(11) **EP 2 840 255 B1**
(45) Veröffentlichungstag und Bekanntmachung des Hinweises auf die Patenterteilung: **10.07.2019**
(21) Anmeldenummer: 14162231.6
(22) Anmeldetag: 28.03.2014
(51) Int. Cl.: F03D 1/06

(54) **Rotorflügelprofil fur eine Windturbine**
Profile for a wind turbine rotor blade
Profil d'une pale de rotor d'une éolienne

(30) Priorität: 23.08.2013 EP 13181542
(43) Veröffentlichungstag der Anmeldung: 25.02.2015
(73) Patentinhaber: eno energy systems GmbH, 18055 Rostock (DE)
(72) Erfinder: Lutz, Thorsten, 71111 Waldenbuch (DE); Kleinhansl, Stefan, 73765 Neuhausen (DE); Porm, Karsten, 18236 Kröpelin (DE)
(74) Vertreter: 2SPL Patentanwälte PartG mbB

(56) Entgegenhaltungen:
- WO-A1-2012/007058
- US-A1- 2009 123 289
- Tomas Melin: "Parametric Airfoil Catalog Part I", Linköping, Sweden, März 2013 (2013-03), Seiten 1-570, XP055453930, Linköping, Sweden ISBN: 978-91-7-519656-5 Gefunden im Internet: URL:https://www.diva-portal.org/smash/get/ diva2:680077/FULLTEXT02.pdf [gefunden am 2018-02-23]

## Beschreibung

Ausführungsbeispiele beziehen sich auf einen Rotorflügel für eine Windenergieanlage, eine Windenergieanlage und einen Windpark.

"Parametric Airfoil Catalog - Part I", Thomas Melin, März 2003, Seite 293 offenbart einen Rotorflügel gemäß dem Oberbegriff des Anspruchs 1.

Aufgrund unterschiedlicher Rahmen- und Randbedingungen, zu denen beispielsweise eine Verknappung von fossilen Energieträgern zählt, nimmt die Bedeutung regenerativer und/oder umweltfreundlicher Technologien zur Energieerzeugung an Bedeutung zu. Neben der Solartechnik spielt hierbei insbesondere die Erzeugung oder Gewinnung von Energie durch Windenergieanlagen eine nicht unerhebliche Rolle, bei der Strömungsenergie von Luftmassen in technisch leichter nutzbare Energieformen erfolgt.

Neben einer grundsätzlichen Eignung eines bestimmten Standortes, an dem eine oder mehrere Windenergieanlagen errichtet werden sollen, spielen weitere Faktoren bei der Bestimmung und Festlegung eines entsprechenden Standortes eine wesentliche Rolle. Zu der grundsätzlichen Eignung eines solchen Standortes zählt beispielsweise das Vorherrschen einer ausreichenden mittleren Windgeschwindigkeit eine nicht unerhebliche Rolle.

Aber auch andere Faktoren sind bei der Auswahl des betreffenden Standortes zu berücksichtigen, zu denen beispielsweise der Aufwand zur Einspeisung der erzeugten Energie in ein Stromnetz, ein Aufwand für die Erschließung aber auch soziale Komponenten, wie beispielsweise die soziale Akzeptanz eines entsprechenden Windparks, zählen.

Mit zunehmender Bedeutung der Windenergienutzung besteht grundsätzlich die Herausforderung, dass die geeigneten Standorte knapper werden. Um dennoch auch weiterhin möglichst größere Energiemengen erzeugen zu können, besteht daher ein Bedarf daran, potentielle Flächen besser zu nutzen.

Diesem Bedarf tragen ein Rotorflügel gemäß Patentanspruch 1, eine Windenergieanlage gemäß Patentanspruch 9 und ein Windpark gemäß Patentanspruch 14 Rechnung.

Ein Rotorflügel für eine Windenergieanlage gemäß einem Ausführungsbeispiel umfasst wenigstens abschnittsweise ein Profil in einem Außenbereich des Rotorflügels, wobei sich der Außenbereich bezogen auf eine Gesamtlänge des Rotorflügels ausgehend von einer Mitte des Rotorflügels bis zu einer Blattspitze des Rotorflügels erstreckt. Das Profil weist eine Profildicke von mindestens 17.0% und weniger als 19.0% einer Länge einer Profilsehne des Profils auf, wobei das Profil ausgehend von einer Vorderkante des Profils eine Dickenrücklage zwischen 35% und 45% der Länge der Profilsehne des Profils aufweist und wobei das Profil einen maximalen Abstand einer Skelettlinie des Profils von der Profilsehne zwischen 3.5% und 4.5% der Länge der Profilsehne des Profils aufweist. Das Profil weist ferner ausgehend von der Vorderkante eine Wölbungsrücklage zwischen 40% und 50% der Länge der Profilsehne des Profils auf, wobei das Profil einen Nasenradius von weniger als 2% der Länge der Profilsehne des Profils aufweist. Die Profilsehne des Profils und eine Kontur einer Profilseite weisen einen Schnittpunkt (210) auf, der einen Abstand von mindestens 75% und höchstens 85% der Länge der Profilsehne des Profils von der Vorderkante des Profils aufweist, wobei das Profil an einer der Vorderkante entlang der Profilsehne gegenüberliegenden Hinterkante des Profils einen Winkel zwischen der Skelettlinie und der Profilsehne aufweist, der mindestens 18° und höchstens 24° beträgt.

Eine Windenergieanlage gemäß einem Ausführungsbeispiel umfasst wenigstens einen um eine horizontale Achse drehbar gelagerten Rotorflügel gemäß einem Ausführungsbeispiel und einen Generator, der mit dem wenigstens einen Rotorflügel derart gekoppelt und ausgebildet ist, um einen Teil einer in einer Drehbewegung des wenigstens einen Rotorflügels umfassten Energie in eine andere technisch verwertbare Energieform umzuwandeln.

Ein Windpark gemäß einem Ausführungsbeispiel umfasst wenigstens eine Windenergieanlage gemäß einem Ausführungsbeispiel und wenigstens eine weitere Windenergieanlage, wobei die wenigstens eine weitere Windenergieanlage bezogen auf eine vorbestimmte Richtung, eine Windrichtung und/oder eine Hauptwindrichtung wenigstens zeitweise in einem Vorlauf oder einem Nachlauf wenigstens einer der Windenergieanlagen angeordnet ist.

Ausführungsbeispielen liegt so die Erkenntnis zugrunde, dass es durch die beschriebene Ausgestaltung eines Rotorflügels möglich ist, auf einem gegebenen Areal eine größere Anzahl von Windenergieanlagen zu errichten und zu betreiben, um so eine höhere Flächennutzung, also eine höhere Anlagendichte in einem Windpark zu ermöglichen. Hierdurch kann es möglich sein, trotz einer vielleicht geringeren Leistung oder Energiemenge, welche eine einzelne Windenergieanlage erzeugt, eine Gesamtleistung oder Gesamtenergiemenge des betreffenden Windparks zu erhöhen. Die betreffende Leistung oder Energie ist im Allgemeinen elektrische Leistung oder Energie, kann aber gegebenenfalls auch in einer anderen Form - optional unter Zwischenschaltung der Gewinnung elektrischer Energie - den Windpark verlassen.

So kann ein Rotorflügel gemäß einem Ausführungsbeispiel gegebenenfalls dazu beitragen, die Intensität von Turbulenzen in dem Nachlauf einer Windenergieanlage bzw. in einem Windpark zu reduzieren. Ergänzend oder alternativ kann ebenfalls eine geringere Belastung erzielbar sein. Ebenso können gegebenenfalls ein geringerer Widerstandsbeiwert und/oder ein Anstellwinkelbereich mit einem sehr geringen Widerstandsbeiwert erzielbar sein. Damit kann es ergänzend oder alternativ hierzu möglich sein, auch hohe Turbulenzintensitäten zu ertragen, die durch die Umgebungsbedingungen aber auch durch den Nachlauf anderer Windenergieanlagen infolge geringer Abstände zwischen den einzelnen Windenergieanlagen in einem Windpark hervorgerufen werden.

Als Turbulenz wird häufig ein Strömungszustand der Luft oder eines anderen Mediums bezeichnet, der durch eine Bildung und einen Zerfall von Wirbeln hervorsticht. Windturbulenzen können hierbei beispielsweise von einer Oberflächenrauigkeit, einer Geländeform oder aber auch von benachbarten Windenergieanlagen verursacht werden, um nur einige mögliche Quellen von Turbulenzen zu nennen.

Die Turbulenzintensität kann als Maß dafür herangezogen werden, wie stark die Windgeschwindigkeit in einem bestimmten Zeitintervall bei einer bestimmten Windgeschwindigkeit schwankt und kann beispielsweise auf die Standardabweichung bezogen und in Prozenten angegeben werden. Eine Kenntnis der Umgebungsturbulenz eines Standortes kann hierbei unter anderem von großer Bedeutung für die Last- und Standsicherheitsberechnungen einer Windenergieanlage sein. Hierbei gilt grundsätzlich, dass mit steigender Turbulenzintensität eine größere mechanische Belastung der Windenergieanlage einhergeht.

Der Auslegungspunkt kann beispielsweise der Betriebspunkt der Windenergieanlage sein, an dem eine maximale Gleitzahl vorliegt, also das maximale Verhältnis von Auftriebskraft zur Widerstandskraft des Rotorflügels. Die Auslegungswindgeschwindigkeit kann dabei beispielsweise so definiert sein, dass es die Windgeschwindigkeit ist, bei der ein Leistungsbeiwert maximal wird. Entsprechend kann beispielsweise auch die Auslegungsschnelllaufzahl definiert sein, die das Verhältnis der Umfangsgeschwindigkeit des Rotorblatts (Blattspitzengeschwindigkeit) zur Windgeschwindigkeit angibt. Dies kann selbstverständlich auch bei anderen Punkten als dem Auslegungspunkt gelten.

Das Profil des Rotorflügels kann eine Vorderkante und eine Hinterkante aufweisen, die von der ersten Profilseite und der zweiten Profilseite entlang des Profils miteinander verbunden werden. Die Profilsehne stellt hierbei die gerade Verbindungslinie zwischen der Vorderkante und der Hinterkante des Profils dar. Die Skelettlinie stellt hierbei die sogenannte Mittellinie des Profils dar. Die Skelettlinie kann so beispielsweise die Punkte umfassen, die senkrecht zu der Profilsehne den gleichen Abstand zu der ersten und der zweiten Profilseite aufweisen.

Ein maximaler Abstand der Skelettlinie von der Profilsehne wird dabei als Profilwölbung bezeichnet. Ist das Profil so beispielsweise unsymmetrisch, sind also die erste Profilseite und die zweite Profilseite nicht spiegelsymmetrisch ausgestaltet, fallen typischerweise die Profilsehne und die Skelettlinie auseinander. Die Wölbungsrücklage bezeichnet hierbei den Abstand bzw. die Position des Ortes der maximalen Profilwölbung von der Vorderkante des Profils im Verhältnis zu der Länge der Profilsehne. Bei einem symmetrischen Profil ist die Profilwölbung dagegen gleich Null, eine Wölbungsrücklage kann dann nicht angegeben werden.

Die Profildicke definiert hierbei den maximalen Abstand der ersten Profilseite zu der zweiten Profilseite senkrecht zu der Profilsehne. Die Dickenrücklage bezeichnet hierbei den Abstand bzw. die Position des Ortes der maximalen Profildicke von der Vorderkante des Profils im Verhältnis zu der Länge der Profilsehne, deren Länge auch als Profiltiefe bezeichnet wird.

Der Nasenradius beschreibt schließlich einen Radius eines Kreisbogensegments, der eine Krümmung des Profils an der Vorderkante, also der Profilnase, beschreibt. Das Kreisbogensegment kann so beispielsweise bereits durch drei Punkte an der Vorderkante bestimmt sein, die möglichst nahe an der Vorderkante liegen. Der Nasenradius wird dabei typischerweise ebenfalls auf die Profiltiefe, also die Länge der Profilsehne des Profils bezogen.

Weiterhin kann ein solcher Rotorflügel gemäß einem Ausführungsbeispiel einen Bereich aufweisen, in dem eine erste Profilseite und eine zweite Profilseite, die die Kontur des Rotorflügels zumindest teilweise bilden, in einem gemeinsamen, von der Profilsehne untertrennten Halbraum liegen. Dieser Bereich kann beispielsweise wenigstens teilweise ausgehend von der Vorderkante des Profils in einem Erstreckungsbereich zwischen 75% und 100% der Länge der Profilsehne des Profils liegen.

Anders ausgedrückt kann die Profilsehne außerhalb seines Profils liegen. Der Schnittpunkt der betreffenden Profilseite bzw. der Kontur und der Profilsehne liegt so in einem Bereich zwischen 75% und 85%, optional auch in einem Bereich, der beispielsweise bei 77% beginnt und/oder bei 83% endet.

Optional kann bei einem Rotorflügel gemäß einem Ausführungsbeispiel das Profil eine stumpf ausgebildete Hinterkante aufweisen, die eine Dicke von mindestens 0.05% der Länge der Profilsehne aufweist. Die Hinterkante liegt hierbei entlang der Profilsehne an einer der Vorderkante gegenüber liegenden Seite des Rotorflügels. Hierdurch kann gegebenenfalls ein Strömungsabriss an dem Rotorflügel verbessert werden.

So können bei einem Rotorflügel gemäß einem Ausführungsbeispiel die erste Profilseite und die zweite Profilseite an der Hinterkante des Profils durch eine Hinterkantenfläche miteinander verbunden sein, die eine Höhe von wenigstens 0.05% der Länge der Profilsehne des Profils aufweist. Hierdurch kann ein Rotorflügel einfacher gefertigt werden, ohne dass dadurch die aerodynamischen Eigenschaften des Rotorflügels nennenswert beeinflusst werden. Optional kann gegebenenfalls Material und damit Gewicht eingespart werden. Die Hinterkantenfläche kann hierbei auch beispielsweise eine Länge von wenigstens 0.1%, wenigstens 0.5% oder wenigstens 1% der Länge der Profilsehne des Profils aufweisen. Ebenso kann sie auch nach oben hin begrenzt sein. So kann diese beispielsweise höchstens 10%, höchstens 5% oder auch höchstens 1% der Länge der Profilsehne betragen. So kann die Hinterkantenfläche 170 mit der Profilsehne 110 beispielsweise einen Winkel von etwa 90° einschließen. Anders ausgedrückt steht die Hinterkantenfläche 170 rechtwinklig oder nahezu rechtwinklig zu der Profilsehne 110. Bei anderen Ausführungsbeispielen kann dieser Winkel aber auch um höchstens 80° von diesem rechten Winkel abweichen. Ebenso kann der Winkel auch um höchstens 45° von diesem rechten Winkel abweichen. Auch hierdurch kann gegebenenfalls ein Abrissverhalten der Strömung an der Hinterkante so gestaltet werden, dass dort weniger Turbulenzen entstehen.

Bei einem Rotorflügel gemäß einem Ausführungsbeispiel kann die Länge der Profilsehne des Profils in dem Außenbereich weniger als 7% der Gesamtlänge des Rotorflügels entsprechen. Bei einem anderen Ausführungsbeispiel kann die Länge der Profilsehne des Profils in dem Außenbereich des Rotorflügels aber auch weniger als 6% betragen. Es kann sich so also um ein vergleichsweise schmales Rotorblatt handeln, wodurch ein Verhältnis aus Auftriebskraft und Widerstandskraft, das auch als Gleitzahl bezeichnet wird, gegebenenfalls positiv beeinflusst und - ergänzend oder alternativ - eine Turbulenzbildung durch den Rotorflügel reduziert werden kann.

Ergänzend oder alternativ kann ein Rotorflügel gemäß einem Ausführungsbeispiel einen Nabenanschluss mit einem kreisförmigen oder nahezu kreisförmigen Nabenanschlussprofil aufweisen. Hierdurch kann es gegebenenfalls möglich sein, mechanische Belastungen in dem Nabenbereich des Rotorflügels, der auch als Wurzel bezeichnet wird, zu reduzieren.

Der Nabenanschluss stellt hierbei einen Bereich des Rotorflügels dar, über den eine Verbindung des Rotorflügels mit einer Nabe der Windenergieanlage erfolgen kann. Die Nabe kann hierbei um die horizontale Achse drehbar gelagert sein und so die drehbare Lagerung des Rotorflügels um die horizontale Achse bei einer Windenergieanlage gemäß einem Ausführungsbeispiel wenigstens teilweise mitbewirken.

Optional kann sich bei einem Rotorflügel gemäß einem Ausführungsbeispiel das Nabenanschlussprofil entlang einer Haupterstreckungsrichtung des Rotorflügels ausgehend von dem Nabenanschluss höchstens bis 10% der der Gesamtlänge des Rotorflügels (330) erstrecken. Hierdurch kann es möglich sein, einerseits eine Entlastung der mechanischen Struktur des Rotorflügels zu bewirken, ohne jedoch den zur Verfügung stehenden Bauraum des Rotorflügels für eine solche Anschlussstruktur und den mechanischen Übergangsbereich zu dem Rotorprofil in erheblichem Maße zu verwenden, der zur Energieerzeugung weniger stark beiträgt. Das Rotorblatt weist hierbei entlang der Haupterstreckungsrichtung seine größte Ausdehnung auf.

Ergänzend oder alternativ kann ein solcher Rotorflügel gemäß einem Ausführungsbeispiel an einer Stelle, die höchstens 30% der Gesamtlänge des Rotorflügels von dem Nabenanschluss entfernt ist, ein Übergangsprofil mit einer Profildicke von 50% der Dicke des Nabenanschlussprofils aufweisen. Hierdurch kann es gegebenenfalls möglich sein, einen technisch verwertbaren Auftriebsanteil auch in diesem Bereich des Rotorflügels zu erzielen.

Ergänzend oder alternativ kann ein solcher Rotorflügel gemäß einem Ausführungsbeispiel an einer weiteren Stelle, die höchstens 35% der Gesamtlänge des Rotorflügels ausgehend von einem Nabenanschluss liegt, ein Profil aufweisen, welches eine größte Profiltiefe des Rotorflügels umfasst. Auch hierdurch kann es gegebenenfalls möglich sein, einen Auftrieb des Rotorflügels zu steigern.

Ergänzend oder alternativ kann bei einem Rotorflügel gemäß einem Ausführungsbeispiel wenigstens ein Übergang zwischen unterschiedlichen Profilen harmonisch erfolgen. Ebenso können gegebenenfalls alle Übergänge zwischen unterschiedlichen Profilen harmonisch erfolgen. Hierdurch kann es gegebenenfalls möglich sein, eine Turbulenzbildung zu verringern.

Hierbei kann ein harmonischer Übergang beispielsweise ein solcher sein, der nur im Wesentlichen glatte Oberflächen aufweist, die abschnittsweise gerade und/oder gebogen verlaufen können. Bei einem harmonischen Übergang kann so gegebenenfalls eine Kante quer der Erstreckungsrichtung des Rotorflügels vermieden sein, durch welche Turbulenzen bei einer Bewegung des Rotorflügels verstärkt entstehen könnten. Selbstverständlich sind hierbei Fertigungs-, Montage- oder anders bedingte Abweichungen von einer solchen glatten Oberfläche umfasst. Ebenso sind Beschichtungen, Lackierungen und andere Oberflächenbehandlungen mitumfasst, die zu einer definierten bzw. spezifizierten Struktur einer ansonsten jedoch im Wesentlichen glatt verlaufenden Oberfläche führen.

Optional kann bei einer Windenergieanlage gemäß einem Ausführungsbeispiel das wenigstens abschnittsweise umfasste Profil in dem Außenbereich des mindestens einen Rotorflügels an einem durch eine maximale Gleitzahl definierten Auslegungspunkt und in einem sauberen Zustand des Rotorflügels einen Auftriebsbeiwert von höchstens 1.3 und einen Widerstandsbeiwert von höchstens 0.01 erreichen.

Ergänzend oder alternativ kann bei einer Windenergieanlage gemäß einem Ausführungsbeispiel das wenigstens abschnittsweise umfasste Profil in dem Außenbereich des mindestens einen Rotorflügels einen Anstellwinkelbereich von mehr als 5° aufweisen, in welchem der Widerstandsbeiwert einen minimalen Widerstandsbeiwert von höchstens 0.007 um 50% nicht überschreitet. Hierdurch kann es gegebenenfalls möglich sein, dass die Bildung von Turbulenzen bei Schräganströmung infolge schnell wechselnder Windrichtungen minimiert wird.

Ergänzend oder alternativ kann eine Windenergieanlage gemäß einem Ausführungsbeispiel für eine Auslegungsturbulenz entsprechend der Definition zu dem charakteristischen Wert der Turbulenzintensivität bei 15 m/s nach IEC 61400-1, Edition 3 von mehr als 16% und weniger als 24% ausgelegt sein. Hierdurch kann es möglich sein, dass die Windenergieanlage durch einen geringeren Anlagenabstand induzierte Turbulenzen besser zu ertragen vermag.

Ergänzend oder alternativ kann eine Windenergieanlage gemäß einem Ausführungsbeispiel in einem regulären Betrieb bei einer Windgeschwindigkeit von mehr als 4 m/s einen statischen Schubbeiwert von stets nicht mehr als 0.8 aufweisen. Hierdurch kann es gegebenenfalls möglich sein, eine Reduzierung einer anlageninduzierten Turbulenz durch eine Windenergieanlage mit einem geringen Rotorschub zu erzielen.

Optional kann bei einem Windpark gemäß einem Ausführungsbeispiel die wenigstens eine weitere Windenergieanlage ebenfalls eine Windenergieanlage gemäß einem Ausführungsbeispiel umfassen. Ein Windpark kann so beispielsweise eine Mehrzahl gleicher oder auch unterschiedlicher Ausführungsbeispiele einer Windenergieanlage umfassen.

Der Schubbeiwert cs wird auch als c_{T}-Wert (thrust) bezeichnet. Ebenso wird der Auftriebsbeiwert c_{A} auch als c_{L}-Wert (lift) und der Widerstandsbeiwert cw auch als c_{D}-Wert (drag) bezeichnet. Anders ausgedrückt werden für das Formelzeichen cs auch das Formelzeichen c_{T}, für das Formelzeichen c_{A} auch das Formelzeichen c_{L} und für das Formelzeichen cw auch das Formelzeichen c_{D} verwendet.

Eine mechanische Kopplung zweier Komponenten umfasst sowohl eine unmittelbare, wie auch eine mittelbare Kopplung.

Nachfolgend werden unter Bezugnahme auf die beiliegenden Figuren Ausführungsbeispiele näher beschrieben und erläutert.
- Fig. 1: zeigt ein Profil eines Rotorflügels gemäß einem Ausführungsbeispiel in einem Außenbereich;
- Fig. 2: zeigt eine vergrößerte Darstellung der Hinterkante des Profils eines Rotorflügels gemäß einem Ausführungsbeispiel;
- Fig. 3: zeigt eine perspektivische Teildarstellung einer Nabe einer Windenergieanlage gemäß einem Ausführungsbeispiel mit mehreren Rotorflügeln gemäß einem Ausführungsbeispiel im Bereich des Nabenanschlusses der Rotorflügel;
- Fig. 4: zeigt eine schematisch vereinfachte Darstellung einer Windenergieanlage gemäß einem Ausführungsbeispiel; und
- Fig. 5: zeigt eine schematisch vereinfachte Darstellung eines Windparks gemäß einem Ausführungsbeispiel.

Einige Ausführungsbeispiele werden nun ausführlicher unter Bezugnahme auf die beiliegenden Figuren näher beschrieben. In den Figuren können die Dickenabmessungen von Linien, Bereichen, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

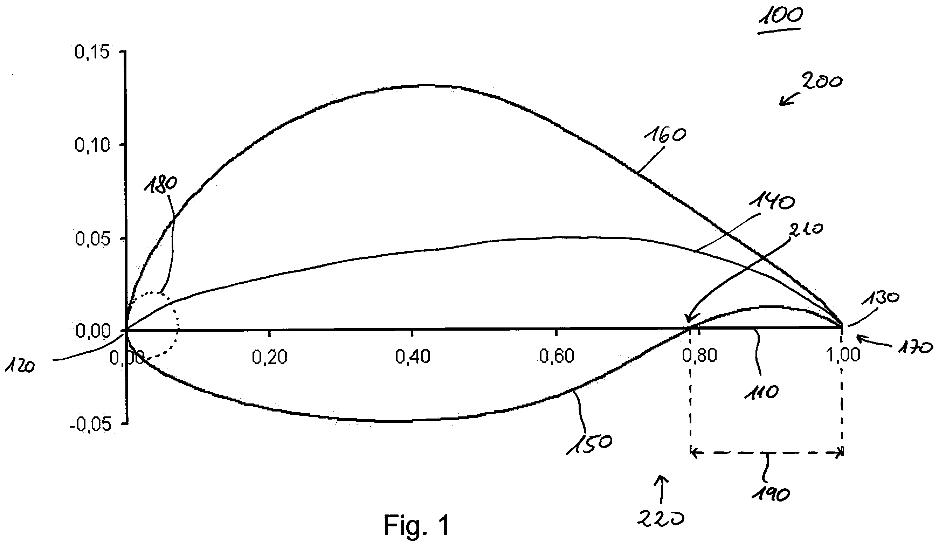

Fig. 1 zeigt eine Darstellung eines Profils 100 eines Rotorflügels gemäß einem Ausführungsbeispiel für eine Windenergieanlage. Das Profil 100 ist hierbei wenigstens abschnittsweise in einem Außenbereich des Rotorflügels angeordnet, wobei sich der Außenbereich des Rotorflügels ausgehend von einer Mitte des Rotorflügels erstreckt. Der Rotorflügel erstreckt sich hierbei entlang einer Haupterstreckungsrichtung, die auf der in Fig. 1 gezeigten Darstellung im Wesentlichen senkrecht steht. Der Rotorflügel weist also das in Fig. 1 gezeigte und im weiteren Verlauf noch beschriebene Profil zumindest abschnittsweise in dem Außenbereich des Rotorflügels auf.

Die Darstellung in Fig. 1 ist hierbei so gewählt, dass die Abszisse einer Profilsehne 110 entspricht. Die Profilsehne 110 verbindet hierbei als Gerade eine Vorderkante 120 des Profils mit einer Hinterkante 130. Hinsichtlich der Bemaßung des Profils wird hierbei eine auf die Gesamtlänge bzw. Länge der Profilsehne 110 bezogene Bemaßung verwendet. So liegt die Vorderkante 120 des Profils 100 bei einer Länge von 0.00 und die Hinterkante bei einer Länge von 1.00. Die gleiche Bemaßung wird auch für Dickenangaben und andere Angaben senkrecht zu der Richtung der Profilsehne 110 verwendet.

Die Vorderkante 120 und die Hinterkante 130 sind hierbei ferner durch eine Skelettlinie 140 miteinander verbunden. Im Unterschied zu der Profilsehne 110 handelt es sich bei der Skelettlinie 140 nicht notwendigerweise um eine Gerade. Die Skelettlinie 140 ist hierbei eine Linie, die die Profilseiten des Profils 100 miteinander in Beziehung setzt. So weist das Profil 100 eine erste Profilseite 150 und eine zweite Profilseite 160 auf, die an der Vorderkante 120 zusammentreffen. Je nach konkreter Ausgestaltung eines Profils 100 gemäß einem Ausführungsbeispiel können die erste und die zweite Profilseite 150, 160 auch an der Hinterkante 130 zusammentreffen, es kann jedoch auch an der Hinterkante 130 eine Hinterkantenfläche 170 angeordnet sein, welche die Hinterkante 130 umfasst und die erste und zweite Profilseite 150, 160 miteinander verbindet. Die erste Profilseite 150 wird häufig auch als untere Profilseite oder Unterseite des Profils 100 bezeichnet, während die zweite Profilseite 160 als obere Profilseite oder als Oberseite des Profils 100 bezeichnet wird.

Die Skelettlinie 140 bezeichnet nun die Punkte, die senkrecht zu der Profilsehne 110 einen gleichen Abstand von der ersten Profilseite 150 und der zweiten Profilseite 160 aufweisen. Handelt es sich so bei dem Profil 100 gerade um ein nicht symmetrisches Profil 100, bei dem die Punkte der ersten Profilseite 150 und die der zweiten Profilseite 160 bezogen auf die Profilsehne 110 in gleichem Abstand angeordnet sind, handelt es sich bei der Skelettlinie 140 typischerweise nicht um eine Gerade, sondern eine gebogene Linie.

Wie bereits zuvor erläutert wurde, zeigt Fig. 1 hierbei das Profil in dem Außenbereich des Rotorflügels. Das Profil weist in dem Außenbereich zumindest abschnittsweise eine Profildicke, also einen maximalen Abstand senkrecht zu der Profilsehne 110 zwischen der ersten Profilseite 150 und der zweiten Profilseite 160 von mindestens 17.0% und weniger als 19.0% der Länge der Profilsehne des Profils 100 auf. Bei anderen Ausführungsbeispielen kann die Profildicke auch im Bereich von einschließlich 17.5% bis einschließlich 18.5% liegen. Genauer gesagt weist das in Fig. 1 gezeigte Ausführungsbeispiel eines Profils 100 eine Profildicke von etwa 18% auf.

Der maximale Wert der Profildicke wird hierbei ausgehend von der Vorderkante des Profils 100, die auch als Profilnase bezeichnet wird, in einem Bereich zwischen 35% und 45% der Länge der Profilsehne erreicht. Dieser Wert wird auch als Dickenrücklage bezeichnet, wobei genauer gesagt bei dem hier gezeigten Ausführungsbeispiel die Dickenrücklage bei etwa 40% der Länge der Profilsehne liegt.

Das Profil 100 weist darüber hinaus einen maximalen Abstand der Skelettlinie 140 von der Profilsehne 110 senkrecht zu dieser auf, der in einem Bereich zwischen 3.5% und 4.5% der Länge der Profilsehne liegt. Diese Krümmung der Skelettlinie 140 wird auch als Wölbung bezeichnet. Bei dem hier gezeigten Ausführungsbeispiel beträgt die Wölbung etwa 4%.

Den Wert einer maximalen Wölbung, also des maximalen Abstands der Skelettlinie 140 von der Profilsehne 110 nimmt ein Profil 100 des Rotorflügels gemäß einem Ausführungsbeispiel in einem Bereich zwischen 40% und 50% der Länge der Profilsehne 110 des Profils 100 an. Bei anderen Ausführungsbeispielen beträgt dieser auch als Wölbungsrücklage bezeichnete Wert höchstens 48%. Je nach konkreter Ausgestaltung kann es auch sein, dass die Wölbungsrücklage bei Ausführungsbeispielen wenigstens 42% beträgt. So zeigt Fig. 1 gerade ein Profil, bei dem eine Wölbungsrücklage von etwa 45% vorliegt.

Das Profil 100 weist darüber hinaus an der Vorderkante 120 einen Nasenradius auf, der weniger als 2% der Länge der Profilsehne 110 des Profils entspricht. Bei anderen Ausführungsbeispielen kann dieser Wert auch bei höchstens 1.5% liegen. Um dies zu illustrieren, zeigt Fig. 1 einen Kreis 180, der in dem Bereich der Vorderkante 120 das Profil 100 tangential berührt und seine Form dort beschreibt. Der Kreis 180, wie er in Fig. 1 gezeigt ist, weist hierbei einen Radius von etwa 1% der Länge der Profilsehne 110 auf und kann beispielsweise durch drei Punkte im Bereich der Vorderkante 120 des Profils festgelegt sein.

Im Bereich der Vorderkante 120 treffen so die erste Profilseite 150 und die zweite Profilseite 160 unmittelbar aneinander und weisen hierbei eine Kontur auf, die durch den Kreis 180 und die vorgenannten Nasenradien zumindest abschnittsweise beschreibbar sind.

Bevor mögliche Ausgestaltungen der Hinterkante 130 beschrieben werden, bietet es sich jedoch an, zunächst einen grundsätzlichen Verlauf der ersten und zweiten Profilseiten 150, 160 näher zu beschreiben.

Die zweite Profilseite 160 weist genau wie die erste Profilseite 150 an der Vorderkante 120 eine im Wesentlichen senkrecht zu der Skelettlinie 140 verlaufende Tangente auf. Die zweite Profilseite 160, also die Profiloberseite des Profils 100, weist mit zunehmendem Abstand von der Vorderkante 120 einen kleiner werdenden Steigungswinkel auf, der an einem Punkt zwischen der Vorderkante 120 und der Hinterkante 130 eine Tangente parallel zu der Profilsehne 110 aufweist. Die zweite Profilseite 160 weist so eine im Wesentlichen gleichartig gekrümmte Oberfläche auf, die sich von der Vorderkante 120 bis in den Bereich der Hinterkante 130 erstreckt.

Im Unterschied hierzu weist die erste Profilseite 150, bei der es sich um die Profilunterseite handelt, eine komplexere Form auf. Ausgehend von der im Wesentlichen senkrecht zu der Profilsehne 110 verlaufenden Tangente an der Vorderkante 120 beschreibt die erste Profilseite 150 zunächst ebenfalls eine im Wesentlichen gleichgerichtete Wölbung, bei der ebenfalls an einer bestimmten Stelle eine parallel zu der Profilsehne 110 ausgerichtete Tangente vorliegt. Allerdings schneidet die erste Profilseite 150 die Profilsehne 110 deutlich vor der Hinterkante 130 des Profils 100. Hierdurch bildet sich ein Bereich 190, in dem die erste Profilseite 150 und die zweite Profilseite 160 in einem gemeinsamen, von der Profilsehne 110 getrennten Halbraum 200 liegen.

Anders ausgedrückt weist das Profil 100 einen Schnittpunkt 210 auf, bei dem die erste Profilseite 150 die Profilsehne 110 schneidet und so in den gemeinsamen Halbraum 200 eintritt. In dem Bereich 190 verläuft so also die Profilsehne 110 außerhalb der Kontur des Profils 100 des Rotorflügels. Vor dem Schnittpunkt 210 verläuft die erste Profilseite 150 in einem anderen Halbraum 220, der ebenfalls von der Profilsehne 110 getrennt wird und der zusammen mit dem Halbraum 200 und den Punkten der Profilsehne 110 den vollständigen Raum des Profils bzw. der zugehörigen Querschnittsebene beschreibt und umfasst. Hier verläuft also die Profilsehne 110 im Inneren der Kontur.

Je nach konkreter Ausgestaltung liegt hierbei der Schnittpunkt 210 eines Profils 100 innerhalb eines Bereiches zwischen etwa 75% und 85% der Länge der Profilsehne 110 des Profils 100.

Bei einer Implementierung einer Hinterkantenfläche 170 kann gegebenenfalls die erste Profilseite 150 wiederum in dem Bereich 190 in den anderen Halbraum 220 wechseln. Gerade im Hinblick auf die hintere Begrenzung des Bereichs 190 kann es so passieren, dass die erste Profilseite 150 nicht vollständig in dem Halbraum 200 liegt, sondern bereits zuvor wiederum in den anderen Halbraum 220 wechselt.

Die erste Profilseite 150 weist so in dem Bereich 190 eine weitere Stelle auf, an der sie eine parallel zu der Profilsehne 110 verlaufende Tangente aufweist. Insgesamt beschreibt so die erste Profilseite 150 eine S-förmige Ausgestaltung der Profilseite. Anders ausgedrückt liegt in einem Bereich nahe der Hinterkante 130 die untere Profilseite (erste Profilseite 150) oberhalb der Profilsehne 110.

Diese Ausgestaltung des Profils im Bereich der Hinterkante 130 kann dazu beitragen, eine Turbulenzbildung zu reduzieren. Durch die damit einhergehende laminarere Anströmung kann es gegebenenfalls möglich sein, einen Abstand einer Windenergieanlage, die im Nachlauf einer Windenergieanlage gemäß einem Ausführungsbeispiel mit einem solchen Rotorflügel gemäß einem Ausführungsbeispiel angeordnet ist, zu reduzieren. Hierdurch kann es also gegebenenfalls mit möglich sein, eine Anlagendichte von Windenergieanlagen auf einem vorgegebenen Areal zu erhöhen.

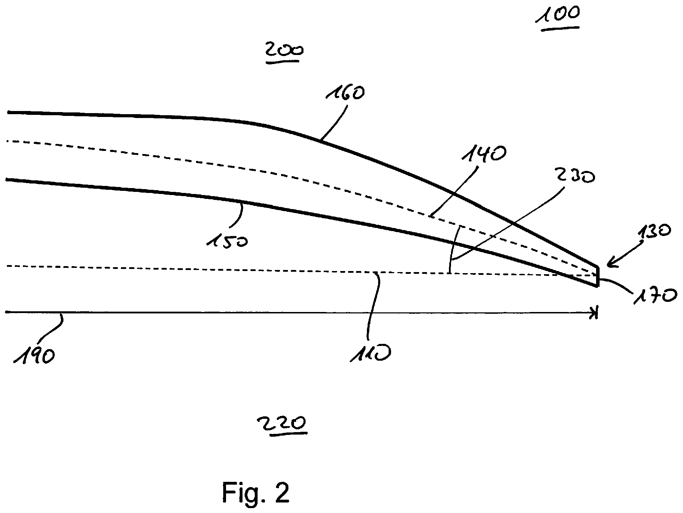

Fig. 2 zeigt eine schematische Darstellung des Profils 100 in einem Bereich der Hinterkante 130. Fig. 2 zeigt so eine vergrößerte Darstellung des Verlaufs der ersten Profilseite 150 und der zweiten Profilseite 160 sowie den Verlauf der Skelettlinie 140 und der Profilsehne 110. Das Profil 100 weist hier zwischen der Profilsehne 110 und der Skelettlinie 140 einen Winkel 230 auf, der im vorliegenden Fall zwischen 18° und 24° liegt.

Die Darstellung der Fig. 2 illustriert jedoch insbesondere ferner, dass bei diesem Profil 100 optional eine Hinterkantenfläche 170 zwischen der ersten Profilseite 150 und der zweiten Profilseite 160 angeordnet ist. Die Hinterkantenfläche 170 verläuft hierbei im Wesentlichen senkrecht bzw. senkrecht zu der Profilsehne 110. Bei anderen Ausführungsbeispielen kann die Hinterkantenfläche 170 mit der Profilsehne 110 jedoch auch einen anderen Winkel einschließen. Dieser kann beispieslweise um höchstens 80° oder auch um höchstens 45° von dem rechten Winkel abweichen.

Die Hinterkantenfläche 170 des Profils 100 weist hier eine Höhe von wenigstens 0.05% der Länge der Profilsehne 110 des Profils 100 auf. Der Rotorflügel 330 kann dadurch gegebenenfalls einfacher gefertigt werden, ohne dass dadurch die aerodynamischen Eigenschaften des Rotorflügels 330 nennenswert beeinflusst werden. Optional kann so auch Material und damit Gewicht eingespart werden. Die Hinterkantenfläche 170 kann hierbei beispielsweise eine Länge von wenigstens 0.1%, wenigstens 0.5% oder wenigstens 1% der Länge der Profilsehne 110 des Profils 100 aufweisen. Ebenso kann sie auch nach oben hin begrenzt sein. So kann diese beispielsweise höchstens 10%, höchstens 5% oder auch höchstens 1% der Länge der Profilsehne 110 betragen.

Ist eine solche Hinterkantenfläche 170 implementiert, kann der Schnittpunkt der Profilsehne 110, also die Hinterkante 130 selbst beispielsweise so definiert werden, dass diese die Hinterkantenfläche 170 hälftig schneidet. Dies kann jedoch dazu führen, dass die erste Profilseite 150, also die Profilunterseite erneut die Profilsehne 110 schneidet und so von dem Halbraum 200 in den weiteren Halbraum 220 erneut übertritt.

Je nach konkreter Ausgestaltung des Profils 100 insbesondere im Hinblick auf sein der Hinterkante 130 zugewandtes Ende kann so gegebenenfalls der Bereich 190 nicht vollständig in dem Erstreckungsbereich liegen.

Je nach konkreter Ausgestaltung eines Ausführungsbeispiels eines Rotorflügels kann dieser an der Vorderkante, der Hinterkante oder auch an beiden Kanten auch anders als oben beschrieben ausgestaltet sein.

Wie bereits zuvor erläutert wurde, können grundsätzlich Rotorflügel mit verschiedenen Querschnitten eingesetzt werden. Diese weisen im Allgemeinen eine Verjüngung zur Blattspitze auf und sind vergleichsweise schmal ausgestaltet. So kann bei einem Rotorflügel gemäß einem Ausführungsbeispiel die Länge der Profilsehne 110 des Profils 100 in dem Außenbereich des Rotorflügels beispielsweise weniger als 7% der Gesamtlänge des Rotorflügels, also der Länge des Rotorflügels entlang der Haupterstreckungsrichtung, entsprechen.

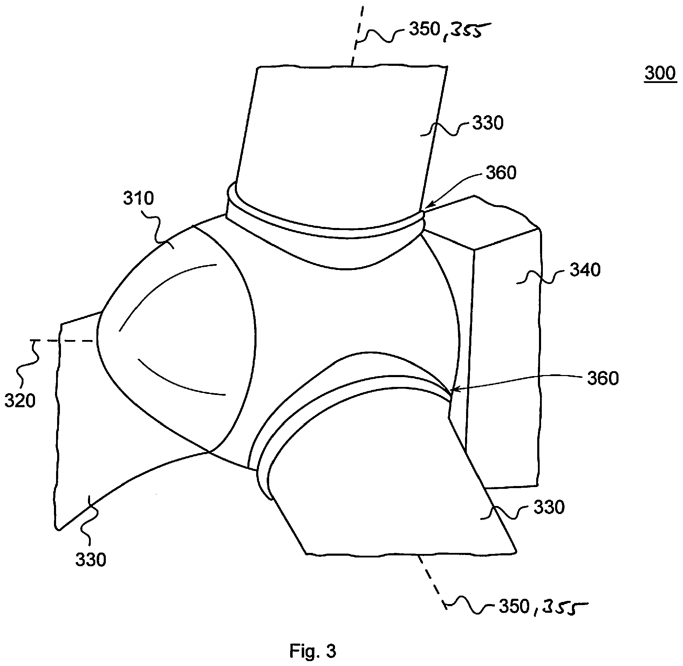

Fig. 3 zeigt in einer perspektivischen Darstellung eine Windenergieanlage 300 gemäß einem Ausführungsbeispiel in einem Bereich einer Nabe 310 der Windenergieanlage 300. Die Nabe 310 ist hierbei um eine horizontale Achse 320 drehbar gelagert. Über die Nabe 310 sind bei der in Fig. 3 gezeigten Ausgestaltung einer Windenergieanlage 300 gemäß einem Ausführungsbeispiel drei Rotorflügel 330 gemäß einem Ausführungsbeispiel gekoppelt. Hierbei erfolgt die Kopplung der Rotorflügel 330 gerade so, dass diese um eine horizontale Achse 320 drehbar sind. Anders ausgedrückt vermittelt die Nabe 310 bei dem hier gezeigten Ausführungsbeispiel die drehbare Lagerung der Rotorflügel 330, die in einem Außenbereich beispielsweise das in den Fig. 1 und 2 gezeigte Profil 100 aufweisen können.

Die Nabe 310 ist über eine in Fig. 3 nicht gezeigte Hauptwelle ihrerseits in einer Gondel 340 der Windenergieanlage 300 drehbar gelagert. Die Hauptwelle erstreckt sich hierbei parallel zu der horizontalen Achse 320.

Um eine Anpassung der Windenergieanlage an die herrschenden Strömungsverhältnisse des Windes zu ermöglichen, sind häufig die Rotorflügel 330 ihrerseits drehbar in der Nabe 310 gelagert. Hierdurch können die Rotorflügel 330 hinsichtlich eines Anstellwinkels der Rotorflügel 330 an die herrschenden Windbedingungen angepasst werden, indem diese ausgehend von der Nabe um eine im Wesentlichen senkrecht zu der horizontalen Achse 330 verlaufenden Schwenkachse 350 verdreht werden können.

Um hier eine leichtere Befestigung und Fixierung der Rotorflügel 330 zu ermöglichen, weisen die Rotorflügel 330 ausgehend von einem Nabenanschluss 360, über den die Rotorflügel 330 mit der Nabe 310 mechanisch verbindbar sind, höchstens 10% der Gesamtlänge des Rotorflügels entlang einer Haupterstreckungsrichtung 355 des Rotorflügels 330 ausgehend von dem Nabenanschluss 360 einen kreisförmigen oder nahezu kreisförmigen Querschnitt auf. Die Haupterstreckungsrichtung 355 fällt häufig im Wesentlichen mit der Schwenkachse 350, um die die Rotorflügel 330 hinsichtlich ihres Anstellwinkels einstellbar sind, zusammen oder nahezu zusammen. Je nach konkreter Implementierung kann auch durch eine Vorbiegung des Rotorflügels 330 die Verbindung zwischen der Nabe und der Blattspitze gegebenenfalls auch nicht identisch mit der Schwenkachse sein.

Ein Rotorflügel 330 gemäß einem Ausführungsbeispiel kann an seiner Blattspitze, d.h. ausgehend von dem Nabenanschluss 360 entlang der Haupterstreckungsrichtung 355 von mindestens 95% der Gesamtlänge des Rotorflügels einen separaten Blattspitzenbereich aufweisen, in dem wenigstens eine Blattspitzenstruktur angeordnet ist. Solche Blattspitzenstrukturen können gegebenenfalls einen positiven Einfluss auf aerodynamische Eigenschaften des Rotorflügels 330 nehmen. Ebenso kann es alternativ oder ergänzend beispielsweise möglich sein, aus fertigungstechnischen oder logistischen Gründen den technischen Aufwand und damit gegebenenfalls Kosten zu senken und/oder die Sicherheit zu erhöhen.

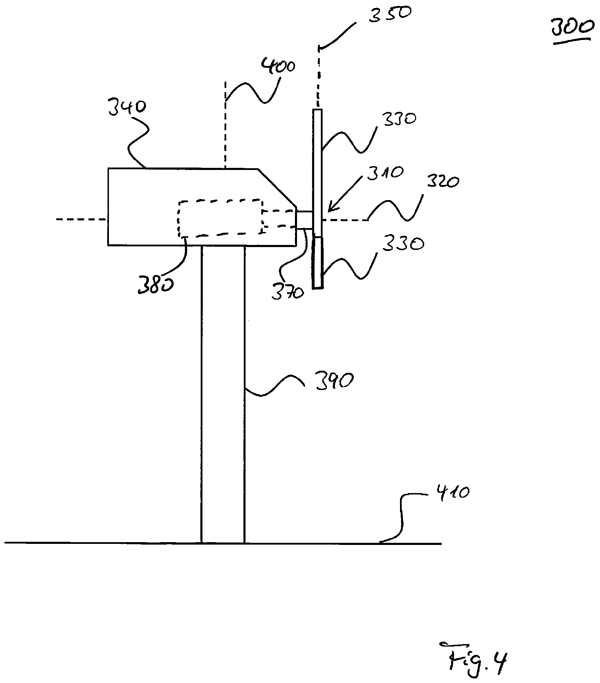

Fig. 4 zeigt eine schematische Darstellung einer Windenergieanlage 300 gemäß einem Ausführungsbeispiel. Auch diese Windenergieanlage 300 weist eine Nabe 310 auf, welche um die horizontale Achse 320 drehbar in einer Gondel 340 der Windenergieanlage 300 gelagert ist. Auch diese Windenergieanlage 300 umfasst wieder mehrere Rotorflügel 330, die sich im Wesentlichen senkrecht von der horizontalen Achse 320 hinweg erstrecken. Auch hier sind die Rotorflügel 330 wiederum im Interesse einer Möglichkeit der Änderung des Anstellwinkels der Rotorflügel 330 im Bereich der Nabe 310 um die Schwenkachse 350 drehbar gelagert.

Die Nabe 310 ist über die Hauptwelle 370 mit einem Generator 380 gekoppelt, der im Inneren der Gondel 340 angeordnet ist. Der Generator ist über die Hauptwelle 370 und die Nabe 310 mit den Rotorflügeln 330 gerade so gekoppelt, dass dieser mindestens einen Teil einer in einer Drehbewegung der Rotorflügel 330 umfassten Energie in eine technisch leichter verwertbare Energie umzuwandeln vermag. So kann es sich beispielsweise um elektrische Energie, jedoch auch um eine Rotationsenergie oder dergleichen handeln.

Um eine verbesserte Ausrichtung der Gondel 340 und damit der Rotorflügel 330 an die herrschenden Windverhältnisse zu ermöglichen, kann die Gondel 340 bezogen auf einen Turm 390, an deren Ende sie mechanisch befestigt ist, um eine Hochachse 400 drehbar gelagert sein. An einer der Gondel abgewandten Seite des Turms 390 ist dieser typischerweise mit einem Untergrund 410 mechanisch verbunden. Der Untergrund 410 kann hierbei sowohl an Land wie auch unterhalb einer Wasseroberfläche, beispielsweise unterhalb einer Meeresoberfläche, angeordnet sein.

Durch die Schwenkbarkeit der Gondel 340 um die Hochachse 400 kann so eine Ausrichtung der Rotorflügel 330 im Wesentlichen senkrecht zu einer herrschenden Windrichtung erfolgen. Eine Änderung der Windgeschwindigkeit kann durch eine Veränderung des Anstellwinkels und damit ein Verschwenken der Rotorflügel 330 um die Schwenkachse 350 berücksichtigt werden. Hierdurch kann es möglich sein, durch eine entsprechende Ausrichtung der Gondel 340 und der Rotorflügel 330 dem Generator 380 eine Erzeugung von technisch leichter verwertbarer Energie, also beispielsweise der zuvor schon genannten elektrischen Energie, zu ermöglichen, die mit den Spezifikationen der betreffenden Windenergieanlage und den herrschenden Windverhältnissen vereinbar ist.

Auch wenn in den zuvor beschriebenen Ausführungsbeispielen eine Windenergieanlage 300 stets mit drei Rotorflügeln 330 beschrieben wurde, können bei anderen Ausführungsbeispielen jedoch auch eine höhere oder eine kleinere Anzahl von Rotorflügeln vorgesehen sein. So kann eine Windenergieanlage 300 beispielsweise nur einen einzigen Rotorflügel 330, zwei Rotorflügel 330 oder auch vier oder mehr Rotorflügel 330 umfassen.

Durch den Einsatz eines Rotorflügels 330 gemäß einem Ausführungsbeispiel kann so beispielsweise auch die Windenergieanlage 100 so ausgestaltet sein, dass diese in einem regulären Betrieb bei einer Windgeschwindigkeit von mehr als 4 m/s einen statischen Schubbeiwert cs von stets nicht mehr als 0.8 aufweist. Ebenso kann es gegebenenfalls möglich sein, durch den Einsatz eines Profils 100 in einem Rotorflügel 330 gemäß einem Ausführungsbeispiel eine Windenergieanlage 300 so auszugestalten, dass der Rotorflügel 330 an einem durch eine maximale Gleitzahl definierten Auslegungspunkt in dem Außenbereich und in einem sauberen Zustand des Rotorflügels 330 einen Auftriebswert von etwa 1.3 und einen Widerstandsbeiwert c_{w} von 0.01 nicht überschreitet. Das Profil 100 des Rotorflügels 330 kann in einem solchen Fall beispielsweise einen Anstellwinkelbereich von mehr als 5° aufweisen, in welchem der Widerstandsbeiwert c_{w} einen minimalen Widerstandsbeiwert von höchstens 0.007 um 50% nicht überschreitet. Anders ausgedrückt kann in dem Anstellwinkelbereich von wenigstens 5° das 1,5-fache des minimalen Widerstandsbeiwerts nicht überschritten werden, wobei der minimale Widerstandsbeiwert höchstens 0,007 ist.

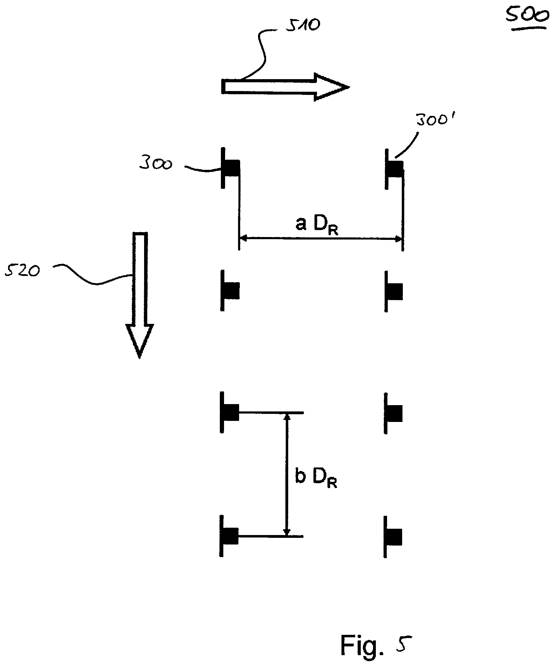

Fig. 5 zeigt schließlich eine schematische Aufsicht auf einen Windpark 500 gemäß einem Ausführungsbeispiel. Der Windpark 500 umfasst so wenigstens eine Windenergieanlage 330 gemäß einem Ausführungsbeispiel sowie wenigstens eine weitere Windenergieanlage 330', die bezogen auf eine vorbestimmte Richtung 510, bei der es sich beispielsweise um eine Windrichtung handeln kann, in einem Nachlauf wenigstens einer der Windenergieanlagen 330 gemäß einem Ausführungsbeispiel angeordnet ist. Die im Nachlauf angeordnete Windenergieanlage 330' kann hierbei optional ebenfalls eine Windenergieanlage 300 gemäß einem Ausführungsbeispiel sein. Anders ausgedrückt kann bei einem Windpark 500 gemäß einem Ausführungsbeispiel die wenigstens eine weitere Windenergieanlage 300' ebenfalls eine Windenergieanlage 300 gemäß einem Ausführungsbeispiel darstellen oder umfassen. Die vorbestimmte Richtung 510 kann zu einer Windrichtung, also beispielsweise einer Haupt- oder Nebenwindrichtung, auch einen von 0° verschiedenen Winkel einschließen. Anders ausgedrückt können eine solche Windrichtung und die vorbestimmte Richtung 510 nicht kollinear sein.

Bei der in Fig. 5 gezeigten Ausgestaltung des Windparks 500 weist dieser insgesamt acht Windenergieanlagen 300 bzw. 300' auf, die bezogen auf die vorbestimmte Richtung 510, bei der es sich um die Hauptwindrichtung handeln kann, und eine weitere vorbestimmte Richtung 520, die optional ebenfalls mit einer Windrichtung, beispielsweise der Nebenwindrichtung zusammenfallen kann, in einem im Wesentlichen rechtwinkeligen Schema angeordnet sind. Entlang der vorbestimmten Richtung 510 weisen die Windenergieanlagen 300, 300' hierbei einen auf einen Rotordurchmesser D_{R} bezogenen Abstand a·D_{R} auf. Entsprechend weisen die Windenergieanlagen 300, 300' auch entlang der weiteren vorbestimmten Richtung 520 einen auf den Rotordurchmesser D_{R} bezogenen Abstand b·D_{R} auf.

Die Koeffizienten a und b sind hierbei positive reelle Zahlen, die gegenüber konventionellen Systemen und konventionellen Windenergieanlagen typischerweise kleiner gewählt werden können, da es durch den Einsatz eines Rotorflügels 330 gemäß einem Ausführungsbeispiel bei einer Windenergieanlage 300 gemäß einem Ausführungsbeispiel möglich sein kann, eine Turbulenzbildung im Nachlauf der betreffenden Windenergieanlage 300 zu reduzieren. Hierdurch kann eine bessere Anströmung der im Nachlauf angeordneten weiteren Windenergieanlagen 300' verbessert werden, sodass diese einen höheren Ertrag abgeben können, als dies gegebenenfalls mit konventionellen Anlagen möglich wäre, wenn diese im Vorlauf vor den betreffenden weiteren Windenergieanlagen 300' angeordnet sind. Bei dem in Fig. 5 gezeigten Windpark 500 werden genauer gesagt nur Windenergieanlagen 300 gemäß einem Ausführungsbeispiel eingesetzt.

Selbstverständlich kann jedoch von der in Fig. 5 gezeigten Windparkkonfiguration bei anderen Windparks 500 gemäß einem Ausführungsbeispiel abgewichen werden. So können beispielsweise sehr wohl Windenergieanlagen 300 gemäß einem Ausführungsbeispiel wie auch konventionelle Windenergieanlagen als weitere Windenergieanlagen 300' zum Einsatz kommen. Auch können gegebenenfalls nicht rechtwinkelig angeordnete Windparkkonfigurationen verwendet werden, die gerade auf im Wesentlichen senkrecht zueinander verlaufenden Richtungen 510 und 520 ausgerichtet sind. Ebenso kann es gegebenenfalls bei einem Windpark 500 gemäß einem Ausführungsbeispiel ratsam sein, keine regelmäßige Anordnung der Windenergieanlagen 300, 300' zu implementieren. Dies kann beispielsweise aufgrund der geografischen Beschaffenheit des betreffenden Areals ratsam sein.

Auch kann eine Anzahl der Windenergieanlagen 300, 300' bei unterschiedlichen Windparks gemäß einem Ausführungsbeispiel beliebig angepasst werden. Ein Windpark ist so stets lediglich als eine Anordnung von wenigstens zwei Windenergieanlagen in räumlicher Nähe zu verstehen. Anders ausgedrückt können also nicht nur rechtwinkelige, also beispielsweise rechteckige oder quadratische Windparkkonfigurationen, sondern auch andere Windparkkonfigurationen verwendet werden. Selbst unregelmäßige oder zumindest teilweise unregelmäßige Windparkkonfigurationen können im Rahmen von Windparks 500 gemäß einem Ausführungsbeispiel umgesetzt werden.

Durch den Einsatz eines Rotorflügels 330 gemäß einem Ausführungsbeispiel, eine Windenergieanlage 300 gemäß einem Ausführungsbeispiel und eines Windparks 500 gemäß einem Ausführungsbeispiel kann so gegebenenfalls eine höhere Anlagendichte in einem solchen Windpark 500 realisiert werden. Ein Rotorflügel 330 gemäß einem Ausführungsbeispiel mit einem Profil 100 kann so zu einer Minimierung oder zumindest Reduzierung von Turbulenzen in dem Windpark 500 und damit zu geringeren Belastungen beitragen. So kann durch den Einsatz eines entsprechenden Rotorflügels 330 eine Auslegung auf möglichst laminare Strömung im Nachlauf erzielbar sein. Ebenso kann es möglich sein, möglichst geringe Widerstandsbeiwerte sowie einen Anstellwinkelbereich mit einem sehr geringen Widerstandsbeiwert zu erreichen. Durch den Einsatz eines entsprechenden Rotorflügels 330 kann so gegebenenfalls ein auf den Rotordurchmesser D_{R} bezogener dimensionsloser Abstand a·D_{R} bzw. b·D_{R} verringert werden, wodurch sich eine Flächenwirtschaftlichkeit gegenüber einer Konfiguration mit konventionellen Anlagen für einen bestimmten Anlagenstandort des Windparks 500 erhöhen kann.

Bei einem Rotorflügel 330 gemäß einem Ausführungsbeispiel kann so das Profil 100 die genannten Kennwerte beispielsweise dadurch erreichen, indem in dem Außenbereich ein eher schmales, dünnes und gewölbtes Blattprofil verwendet wird. Das Profil 100 weist in dem Außenbereich eine Profildicke von weniger als 19.0% und mindestens 17.0%, eine Dickenrücklage von 35% bis 45%, eine Profilwölbung von 3.5% bis 4.5%, eine Wölbungsrücklage von 40% bis 50%, und einen Nasenradius von weniger als 2% der Länge der Profilsehne 110 auf. Dabei kann das Profil außerdem einen Bereich 190 nahe der Hinterkante 130 aufweisen, in dem die untere Profilseite 150 über der Profilsehne 110 liegt, wobei der Schnittpunkt 210 zwischen Profilunterkante 150 und der Profilsehne 110 bei etwa 75% bis 85% der Länge der Profilsehne 110 von der Vorderkante entfernt ist. Der Winkel 230 zwischen der Skelettlinie 140 und der Sehne 110 an der Hinterkante 130 des Profils 100 des Rotorflügels 330 beträgt hierbei zwischen 18° und 24°. Das Profil 100 liegt dabei wenigstens abschnittsweise in dem Außenbereich des Rotorflügels 330, der sich von der Mitte des Rotorflügels 330 ausgehend bis zu der Blattspitze des Rotorflügels 330 erstreckt.

Dabei kann es ratsam sein, fertigungstechnische Anforderungen einzuhalten. So kann bei einem solchen Rotorflügel 330 das Profil eine stumpf ausgebildete Hinterkante 130 aufweisen, die eine Dicke von mindestens 0.05% der Länge der Profilsehne 110 aufweist. Damit wird die Herstellbarkeit eines erfindungsgemäßen Rotorflügels 330 aus mindestens zwei Komponenten, die miteinander gefügt werden, verbessert.

Die Länge der Profilsehne 110 des Profils 100 in dem Außenbereich des Rotorflügels 330 kann dabei weniger als 7% der Blattlänge entsprechen. Durch eine solche Verringerung der Rotorblatttiefe kann gegebenenfalls eine Verminderung der Turbulenzen erzielt werden.

Weiterhin kann der Rotorflügel 330 an dem Nabenanschluss 360 einen kreisförmigen oder nahezu kreisförmigen Querschnitt aufweisen.

Der kreisförmige oder nahezu kreisförmige Nabenanschluss kann sich aus Gründen der Belastbarkeit, der Notwendigkeit der Einbringung von Anschlusselementen oder aus logistischen Gründen bis maximal 10% der Blattlänge ausgehend von dem Nabenanschluss 360, fortsetzen.

Zwischen dem kreisförmigen Nabenanschluss mit einer entsprechenden Profildicke von höchstens 100% und dem Profil des Außenbereiches mit einer Profildicke von mindestens 17% und höchstens 19% ergibt sich ein Profil, welches eine Profildicke von 50% aufweist.

Um den Auftrieb im Bereich des Nabenanschlusses zu erhöhen, kann hier die Profiltiefe vergrößert werden, so dass das Rotorblatt eine Profiltiefe aufweist, die größer ist als die des Nabenanschlusses. Die größte Profiltiefe wird dabei an einer Stelle erreicht, die höchstens 35% der Länge des Rotorblattes vom Nabenanschluss entfernt ist.

Die Übergänge zwischen den Stellen des Nabenanschlusses, dem Profil der größten Profiltiefe, dem Profil mit einer Profildicke von 50% und dem Profil 100 des Außenbereiches können dabei harmonisch gehalten werden, da sonst gegebenenfalls zusätzliche Turbulenzen entstehen können.

Durch den Einsatz eines Rotorflügels 330, einer Windenergieanlage 300 oder eines Windparks 500 gemäß einem Ausführungsbeispiel kann es gegebenenfalls möglich sein, aus einer vorgegebenen Fläche einen höheren Energieertrag zu erzielen. So stehen für Windenergie typischerweise nur begrenzt Flächen zur Verfügung, sodass eine Erhöhung der Anlagendichte auf der verfügbaren Flächen wünschenswert und damit Minimierung der Abstände zwischen den einzelnen Windenergieanlagen ein Ziel ist.

Anlagenabstände werden neben Wirtschaftlichkeitsbetrachtungen jedoch auch durch auftretende Turbulenzen im Windpark und den damit verbundenen Anlagenbelastungen bestimmt, wobei Turbulenzen durch umgebungsinduzierte und anlageninduzierte Turbulenzen auftreten. Eine Anlagenauslegung für eine bestimmte Turbulenzintensität nach erfolgt konventionell nach einer Norm (IEC 61400).

Ansätze zur Verbesserung der Anlagendichte gemäß einem Ausführungsbeispiel erfolgen hierbei gegebenenfalls durch Auslegung über die Anforderungen der Norm hinaus. So kann eine Windenergieanlage beispielsweise für eine Auslegungsturbulenzintensivität entsprechend der Definition zu dem charakteristischen Wert der Turbulenzintensivität bei 15 m/s nach IEC 61400-1, Edition 3 von mehr als 16% und weniger als 24% ausgelegt sein.

Auch kann gegebenenfalls eine Reduzierung der anlageninduzierten Turbulenz durch Windenergieanlagen 300 mit einem geringen Rotorschub erreicht werden. So kann beispielsweise ein Rotorflügel 330 in einem regulären Betrieb bei einer Windgeschwindigkeit von mehr als 4 m/s einen statischen Schubbeiwert von stets nicht mehr als 0.8 aufweisen.

Neben dem eigentlichen Anlagendesign können hierbei auch die aerodynamischen Eigenschaften der Rotorblätter 330 relevant sein. Typischerweise wird der größte Beitrag zur Energieerzeugung durch den Außenbereich des Rotorblattes 330 bereitgestellt, da grundsätzlich die Leistung proportional zum Quadrat des Rotordurchmessers ist. Das Rotorblattprofil 100 in dem Außenbereich ist daher von entscheidender, zumindest jedoch von nicht unerheblicher Bedeutung. Die Erzeugung von großem Auftrieb bei möglichst kleinem Widerstandsbeiwert kann daher ein Ziel sein.

Ebenso oder alternativ kann es beabsichtigt sein, möglichst geringe oder sogar keine wesentlichen Änderungen des Strömungsverhaltens bei kleinen Änderungen der Anströmrichtung zu erzielen, um die Leistungsfähigkeit einer Windenergieanlage bei turbulenten Windverhältnissen positiv zu beeinflussen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Profil
- 110: Profilsehne
- 120: Vorderkante
- 130: Hinterkante
- 140: Skelettlinie
- 150: erste Profilseite
- 160: zweite Profilseite
- 160: Hinterkantenfläche
- 180: Kreis
- 190: Bereich
- 200: Halbraum
- 210: Schnittpunkt
- 220: anderer Halbraum
- 230: Winkel
- 300: Windenergieanlage
- 310: Nabe
- 320: horizontale Achse
- 330: Rotorflügel
- 340: Gondel
- 350: Schwenkachse
- 355: Haupterstreckungsrichtung
- 360: Nabenanschluss
- 370: Hauptwelle
- 380: Generator
- 390: Turm
- 400: Hochachse
- 410: Untergrund
- 500: Windpark
- 510: vorbestimmte Richtung
- 520: weitere vorbestimmte Richtung

## Patentansprüche

1. Rotorflügel (330) für eine Windenergieanlage (300), mit folgenden Merkmalen:
wenigstens abschnittsweise einem Profil (100) in einem Außenbereich des Rotorflügels (330),
wobei sich der Außenbereich bezogen auf eine Gesamtlänge des Rotorflügels (330) ausgehend von einer Mitte des Rotorflügels (330) bis zu einer Blattspitze des Rotorflügels (330) erstreckt;
wobei das Profil (100) eine Profildicke von mindestens 17.0% und weniger als 19.0% einer Länge einer Profilsehne (110) des Profils (100) aufweist;
wobei das Profil (100) ausgehend von einer Vorderkante (120) des Profils (100) eine Dickenrücklage zwischen 35% und 45% der Länge der Profilsehne (110) des Profils (100) aufweist;
wobei das Profil (100) einen maximalen Abstand einer Skelettlinie (140) des Profils (100) von der Profilsehne (110) zwischen 3.5% und 4.5% der Länge der Profilsehne (110) des Profils (100) aufweist;
wobei das Profil (100) ausgehend von der Vorderkante (120) eine Wölbungsrücklage zwischen 40% und 50% der Länge der Profilsehne (110) des Profils (100) aufweist;
**dadurch gekennzeichnet, dass** das Profil (100) einen Nasenradius von weniger als 2% der Länge der Profilsehne (110) des Profils (100) aufweist;
dass die Profilsehne des Profils (100) und eine Kontur einer Profilseite (150) einen Schnittpunkt (210) aufweisen, der einen Abstand von mindestens 75% und höchstens 85% der Länge der Profilsehne (110) des Profils (100) von der Vorderkante (120) des Profils (100) aufweist; und
dass das Profil (100) an einer der Vorderkante (120) entlang der Profilsehne (110) gegenüberliegenden Hinterkante (130) des Profils (100) einen Winkel zwischen der Skelettlinie (140) und der Profilsehne (110) aufweist, der mindestens 18° und höchstens 24° beträgt.

2. Rotorflügel (330) nach Anspruch 1, bei dem das Profil eine stumpf ausgebildete Hinterkante (130) aufweist, die eine Dicke von mindestens 0.05% der Länge der Profilsehne (110) aufweist.

3. Rotorflügel (330) nach einem der vorhergehenden Ansprüche, bei dem die Länge der Profilsehne (100) des Profils (100) in dem Außenbereich des Rotorflügels (330) weniger als 7% der Gesamtlänge des Rotorflügels (330) entspricht.

4. Rotorflügel (330) nach einem der vorhergehenden Ansprüche, der einen Nabenanschluss (360) mit einem kreisförmigen oder nahezu kreisförmigen Nabenanschlussprofil aufweist.

5. Rotorflügel (330) nach Anspruch 4, bei dem sich das Nabenanschlussprofil entlang einer Haupterstreckungsrichtung (355) des Rotorflügels (330) ausgehend von dem Nabenanschluss (360) höchstens bis 10% der der Gesamtlänge des Rotorflügels (330) erstreckt.

6. Rotorflügel (330) nach einem der Ansprüche 4 oder 5, der an einer Stelle, die höchstens 30% der Gesamtlänge des Rotorflügels (330) von dem Nabenanschluss (360) entfernt ist, ein Übergangsprofil mit einer Profildicke von 50% der Dicke des Nabenanschlussprofils aufweist.

7. Rotorflügel (330) nach einem der Ansprüche 4 bis 6, der an einer weiteren Stelle, die höchstens 35% der Gesamtlänge des Rotorflügels (330) ausgehend von einem Nabenanschluss (360) liegt, ein Profil aufweist, welches eine größte Profiltiefe des Rotorflügels (330) umfasst.

8. Rotorflügel (330) nach einem der Ansprüche 4 bis 7, bei dem wenigstens ein Übergang zwischen unterschiedlichen Profilen harmonisch erfolgt oder bei dem alle Übergänge zwischen unterschiedlichen Profilen harmonisch erfolgen.

9. Windenergieanlage (300) mit folgenden Merkmalen:
wenigstens einem um eine horizontale Achse (320) drehbar gelagerten Rotorflügel (330) gemäß einem der vorhergehenden Ansprüche; und
einem Generator (380), der mit dem wenigstens einen Rotorflügel (330) derart gekoppelt und ausgebildet ist, um einen Teil einer in einer Drehbewegung des wenigstens einen Rotorflügels (330) umfassten Energie in eine andere technisch verwertbare Energieform umzuwandeln.

10. Windenergieanlage (300) nach Anspruch 9, bei der das wenigstens abschnittsweise umfasste Profil (100) in dem Außenbereich des mindestens einen Rotorflügels (330) an einem durch eine maximale Gleitzahl definierten Auslegungspunkt und in einem sauberen Zustand des Rotorflügels (330) einen Auftriebsbeiwert von 1.3 und einen Widerstandsbeiwert von 0.01 nicht überschreitet.

11. Windenergieanlage (300) nach einem der Ansprüche 9 oder 10, bei der das wenigstens abschnittsweise umfasste Profil (100) in dem Außenbereich des mindestens einen Rotorflügels (330) einen Anstellwinkelbereich von mehr als 5° aufweist, in welchem der Widerstandsbeiwert einen minimalen Widerstandsbeiwert von höchstens 0.007 um 50% nicht überschreitet.

12. Windenergieanlage (300) nach einem der Ansprüche 9 bis 11, die für eine Auslegungsturbulenz entsprechend der Definition zu dem charakteristischen Wert der Turbulenzintensivität bei 15 m/s nach IEC 61400-1, Edition 3 von mehr als 16% und weniger als 24% ausgelegt ist.

13. Windenergieanlage (300) nach einem der Ansprüche 9 bis 12, die in einem regulären Betrieb bei einer Windgeschwindigkeit von mehr als 4 m/s einen statischen Schubbeiwert von stets nicht mehr als 0.8 aufweist.

14. Windpark (500) mit folgenden Merkmalen:
wenigstens eine Windenergieanlage (300) nach einem der Ansprüche 9 bis 13; und
wenigstens einer weiteren Windenergieanlage (300),
wobei die wenigstens eine weitere Windenergieanlage (300) bezogen auf eine vorbestimmte Richtung (510), eine Windrichtung und/oder eine Hauptwindrichtung wenigstens zeitweise in einem Vorlauf oder einem Nachlauf wenigstens einer der Windenergieanlagen (300) angeordnet ist.

15. Windpark (500) nach Anspruch 14, bei dem die wenigstens eine weitere Windenergieanlage (300) ebenfalls eine Windenergieanlage (300) gemäß einem der Ansprüche 9 bis 13 umfasst.

## Claims

1. A rotor blade (330) for a wind power plant (300), having the following features:
at least in sections a profile (100) in an outside area of the rotor blade (330),
wherein the outer area extends, with regard to a total length of the rotor blade (330) starting from a center of the rotor blade (330), to a blade tip of the rotor blade (330);
wherein the profile (100) comprises a profile thickness of at least 17.0% and less than 19.0% of a length of a chord line (110) of the profile (100);
wherein the profile (100), starting from a leading edge (120) of the profile (100), comprises a position of maximum thickness between 35% and 45% of the length of the chord line (110) of the profile (100);
wherein the profile (100) comprises a maximum distance of a camber line (140) of the profile (100) of the chord line (110) between 3.5% and 4.5% of the length of the chord line (110) of the profile (100);
wherein the profile (100), starting from the leading edge (120), comprises a position of maximum camber between 40% and 50% of the length of the chord line (110) of the profile (100);
**characterized in that** the profile (100) comprises a nose radius of less than 2% of the length of the chord line (110) of the profile (100);
that the chord line of the profile (100) and a contour of a profile side (150) comprise an intersection (210) having a distance of at least 75% and at most 85% of the length of the chord line (110) of the profile (100) from the leading edge (120) of the profile (100); and
that the profile (100), at a trailing edge (130) of the profile (100) opposite to the leading edge (120) along the chord line (110), comprises an angle between the camber line (140) and the chord line (110) amounting to at least 18° and at most 24°.

2. The rotor blade (330) of claim 1, wherein the profile comprises a bluntly formed trailing edge (130) having a thickness of at least 0.05% of the length of the chord line (110).

3. The rotor blade (330) of any of the preceding claims, wherein the length of the chord line (100) of the profile (100) in the outer area of the rotor blade (330) corresponds to less than 7% of the total length of the rotor blade (330).

4. The rotor blade (330) of any of the preceding claims, comprising a hub connection (360) with a circular or almost circular hub connection profile.

5. The rotor blade (330) of claim 4, wherein the hub connection profile extends along a main extension direction (355) of the rotor blade (330) starting from the hub connection (360) at most up to 10% of the total length of the rotor blade (330).

6. The rotor blade (330) of any of claims 4 or 5, comprising a transition profile with a profile thickness of 50% of the thickness of the hub connection profile at a point which is at most 30% of the total length of the rotor blade (330) away from the hub connection (360).

7. The rotor blade (330) of any of claims 4 to 6, comprising a profile, which has a greatest profile depth of the rotor blade (330), at a further point being at most 35% of the total length of the rotor blade (330) away starting from a hub connection (360).

8. The rotor blade (330) of any of claims 4 to 7, wherein at least one transition between different profiles is performed harmonically or wherein all transitions between different profiles are performed harmonically.

9. A wind power plant (300), having the following features:
at least one rotor blade (330) rotatably mounted around a horizontal axis (320) of any of the preceding claims; and
a generator (380) coupled to the at least one rotor blade (330) and configured such as to convert part of an energy comprised in a rotational movement of the at least one rotor blade (330) into another technically recyclable energy form.

10. The wind power plant (300) of claim 9, wherein the profile (100) comprised at least in sections does not exceed a lift coefficient of 1.3 and a drag coefficient of 0.01 in the outer area of the at least one rotor blade (330) at a design point defined by a maximum lift-to-drag ratio and in a clean state of the rotor blade (330).

11. The wind power plant (300) of any of claims 9 oder 10, wherein the profile (100) comprised at least in sections comprises a range of attack of more than 5°, in which the drag coefficient does not exceed a minimum drag coefficient of at most 0.007 by 50%, in the outer area of the at least of one rotor blade (330).

12. The wind power plant (300) of any of claims 9 to 11 designed for a design turbulence following the definition for the characteristic value of turbulence intensity at 15 m/s according to IEC 61400-1, 3rd edition, of more than 16% and less than 24%.

13. The wind power plant (300) of any of claims 9 to 12 comprising a static thrust coefficient of always no more than 0.8 at regular operation at a wind speed of more than 4 m/s.

14. A wind farm (500), having the following features:
at least one wind power plant (300) of any of claims 9 to 13; and
at least one further wind power plant (300),
wherein the at least one further wind power plant (300) related to a predefined direction (510), a wind direction and/or a main wind direction is at least temporarily arranged upstream or downstream of at least of one of the wind power plants (300).

15. The wind farm (500) of claim 14, wherein the at least one further wind power plant (300) also comprises a wind power plant (300) of any of claims 9 to 13.

## Revendications

1. Pale de rotor (330) pour une éolienne (300), comprenant :
au moins en sections un profil (100) dans une zone extérieure de la pale de rotor (330),
la zone extérieure, par rapport à une longueur totale de la pale de rotor (330) partant d'un centre de la pale de rotor (330), s'étendant à un bout de pale de la pale de rotor (330) ;
le profil (100) présentant une épaisseur de profil d'au moins 17,0% et inférieure à 19,0% d'une longueur d'une corde de profil (110) du profil (100) ;
le profil (100) présentant, à partir d'un bord d'attaque (120) du profil (100), une épaisseur maximale comprise entre 35% et 45% de la longueur de la corde de profil (110) du profil (100) ;
le profil (100) présentant une distance maximale d'une ligne de squelette (140) du profil (100) de la corde de profil (110) comprise entre 3,5% et 4,5% de la longueur de la corde de profil (110) du profil (100) ;
le profil (100) présentant, à partir du bord d'attaque (120), une cambrure maximale comprise entre 40% et 50% de la longueur de la corde de profil (110) du profil (100) ;
**caractérisée en ce que** le profil (100) présente un rayon de nez inférieur à 2% de la longueur de la corde de profil (110) du profil (100) ;
**en ce que** la corde de profil du profil (100) et un contour d'un côté de profil (150) présentent un point d'intersection (210) ayant une distance d'au moins 75% et n'excédant pas 85% de la longueur de la corde de profil (110) du profil (100) à partir du bord d'attaque (120) du profil (100) ; et
**en ce que** le profil (100) présente un angle entre la ligne de squelette (140) et la corde de profil (110), minimal de 18° et au plus 24°, au niveau d'un bord de fuite (130) du profil (100) opposé au bord d'attaque (120) le long de la corde de profil (110).

2. La pale de rotor (330) selon la revendication 1, le profil présentant un bord de fuite (130) en forme émoussée comprenant une épaisseur d'au moins 0,05% de la longueur de la corde de profil (110).

3. La pale de rotor (330) selon l'une des revendications précédentes, la longueur de la corde de profil (100) du profil (100) correspondant à moins de 7% de la longueur totale de la pale de rotor (330) dans la zone extérieure de la pale de rotor (330).

4. La pale de rotor (330) selon l'une des revendications précédentes, présentant une liaison moyeu (360) avec un profil de liaison moyeu circulaire ou presque circulaire.

5. La pale de rotor (330) selon la revendication 4, le profil de liaison moyeu s'étendant le long d'une direction d'extension principale (355) de la pale de rotor (330) à partir de la liaison moyeu (360) au plus jusqu'à 10% de la longueur totale de la pale de rotor (330).

6. La pale de rotor (330) selon l'une des revendications 4 ou 5, présentant un profil de transition avec une épaisseur de profil de 50% de l'épaisseur du profil de liaison moyeu à une position qui est éloignée de la liaison moyeu (360) d'au plus 30% de la longueur totale de la pale de rotor (330).

7. La pale de rotor (330) selon l'une des revendications 4 à 6, présentant un profil, qui comprend une plus grande profondeur de profil de la pale de rotor (330), à une autre position qui est d'au plus 35% de la longueur totale de la pale de rotor (330) à partir d'une liaison moyeu (360).

8. La pale de rotor (330) selon l'une des revendications 4 à 7, au moins une transition entre des profils différents étant effectuée de façon harmonieuse ou toutes les transitions entre des profils différents étant effectuées de façon harmonieuse.

9. Eolienne (300), comprenant :
au moins une pale de rotor (330) montée rotatif autour d'un axe horizontal (320) selon l'une des revendications précédentes ; et
un générateur (380) couplé avec l'au moins une pale de rotor (330) et configuré de telle sorte qu'une partie d'une énergie comprise dans une mouvement de rotation de l'au moins une pale de rotor (330) est transformée dans une autre énergie exploitable de point de vue technique.

10. L'éolienne (300) selon la revendication 9, le profil (100) compris au moins en sections n'excède pas un coefficient de portance de 1,3 et un coefficient de traînée de 0,01 dans la zone extérieure de l'au moins une pale de rotor (330) à un point de conception défini par une finesse maximale et dans un état propre de la pale de rotor (330).

11. L'éolienne (300) selon l'une des revendications 9 ou 10, le profil (100) compris au moins en sections présentant une zone d'angle d'attaque de plus de 5° dans lequel le coefficient de traînée n'excède pas un coefficient de traînée minimal d'au plus 0,007 de 50% dans la zone extérieure de l'au moins une pale de rotor (330).

12. L'éolienne (300) selon l'une des revendications 9 à 11, conçue pour une turbulence de conception de plus de 16% et de moins de 24% selon la définition concernant la valeur caractéristique de l'intensité de turbulence à 15 m/s selon IEC 61400-1, 3eme édition.

13. L'éolienne (300) selon l'une des revendications 9 à 12, présentant un coefficient statique ne dépassant jamais 0,8 au fonctionnement normal avec une vitesse de vent de 4 m/s.

14. Un parc éolien (500), comprenant :
au moins une éolienne (300) selon l'une des revendications 9 à 13 ; et
au moins une autre éolienne (300),
l'au moins une autre éolienne (300) étant arrangée au moins temporairement en amont ou en aval de l'au moins une des éoliennes (300) par rapport à une direction prédéterminée (510), une direction de vent et/ou une direction de vent principale.

15. Le parc éolien (500) selon la revendication 14, l'au moins une autre éolienne (300) comprenant également une éolienne (300) selon l'une des revendications 9 à 13.
